# EUROPÄISCHE PATENTSCHRIFT

(11) **EP 1 200 343 B1**
(45) Veröffentlichungstag und Bekanntmachung des Hinweises auf die Patenterteilung: **22.10.2003**
(21) Anmeldenummer: 00949080.6
(22) Anmeldetag: 06.06.2000
(51) Int. Cl.: C01B 31/08, C01B 31/10

(54) **VERFAHREN ZUR HERSTELLUNG VON FORMAKTIVKOHLE**
METHOD FOR PRODUCING SHAPED, ACTIVATED CHARCOAL
PROCEDE DE PRODUCTION DE CHARBON ACTIF FA ONNE

(30) Priorität: 18.06.1999 DE 19928001; 17.12.1999 DE 19960921; 28.01.2000 DE 10003660
(43) Veröffentlichungstag der Anmeldung: 02.05.2002
(73) Patentinhaber: German Carbon Teterow GmbH, 17166 Teterow (DE)
(72) Erfinder: GUDERIAN, Joachim, D-44581 Castrop-Rauxel (DE); HEIL, Volker, D-44147 Dortmund (DE); HORN, Christian, D-44135 Dortmund (DE); FESEKER, Michael, D-44135 Dortmund (DE); SOHNEMANN, Jens, D-44139 Dortmund (DE)
(74) Vertreter: Weidener, Jörg Michael, Dipl.-Ing.
(86) Internationale Anmeldenummer: DE0001881
(87) Internationale Veröffentlichungsnummer: WO00078138

(56) Entgegenhaltungen:
- EP-A- 0 725 036
- DE-A- 4 234 785
- DE-A- 4 234 786
- DE-C- 4 416 576
- US-A- 2 546 903
- US-A- 4 002 587
- DATABASE WPI Section Ch, Week 199345 Derwent Publications Ltd., London, GB; Class A81, AN 1993-357020 XP002167798 & JP 05 262511 A (EBARA INFILCO KK), 12. Oktober 1993 (1993-10-12)
- DATABASE WPI Section Ch, Week 199814 Derwent Publications Ltd., London, GB; Class E36, AN 1998-157865 XP002167799 & RU 2 086 504 C (ZARYA STOCK CO), 10. August 1997 (1997-08-10)
- DATABASE WPI Section Ch, Week 199612 Derwent Publications Ltd., London, GB; Class E36, AN 1996-114724 XP002167800 & RU 2 038 295 C (ELEKTROSTALSK NEORGANIKA RES PRODN ASSOC), 27. Juni 1995 (1995-06-27)
- DATABASE WPI Section Ch, Week 198336 Derwent Publications Ltd., London, GB; Class D15, AN 1983-757608 XP002167801 & SU 971 789 A (HYDROLYSIS IND RES), 7. November 1982 (1982-11-07)
- DATABASE WPI Section Ch, Week 198906 Derwent Publications Ltd., London, GB; Class E36, AN 1989-045629 XP002167802 & SU 1 414 777 A (ALIPHANOV N N), 7. August 1988 (1988-08-07)

## Beschreibung

Gegenstand der vorliegenden Erfindung ist ein Verfahren zur Herstellung von hochwertiger Formaktivkohle sowie die durch dieses Verfahren erhältliche hochwertige Formaktivkohle.

Unter Aktivkohle versteht man Kohlenstoff-Strukturen aus kleinsten Graphit-Kristalliten und amorphem Kohlenstoff mit einer porösen Struktur und inneren Oberflächen zwischen 500 und 1500 m²/g. Neben Kohlenstoff enthält das hochaktive Gerüst auch geringe Mengen an chemisch gebundenem Sauerstoff und Wasserstoff. Ferner kann Aktivkohle bis zu ca. 25 Gew.-% mineralische Anteile enthalten. Aktivkohlen werden beispielsweise für die Reinigung von Flüssigkeiten und Gasen im großen Umfang eingesetzt. Die Aktivkohle fungiert dabei aufgrund ihrer großen inneren Oberfläche als Adsorbens zur Entfernung der unerwünschten oder schädlichen Inhaltsstoffe. Mittels Aktivkohle können z.B. entfernt werden: Farb-, Geschmacks- und Geruchsstoffe aus Gasen, Chlor und Ozon aus Wasser, radioaktive Gase in der Kerntechnik. Auch zur Rückgewinnung wertvoller Lösungsmittel oder zur Adsorption der Tankverluste bei der Betankung kann Aktivkohle als Adsorbens eingesetzt werden.

Zur Herstellung von Aktivkohle werden Kohle oder kohlenstoffhaltige Materialien entweder mit Dehydratisierungsmitteln erhitzt und anschließend durch Auswaschen gereinigt (chemische Aktivierung) oder durch trockene Destillation verkohlt und anschließend oxidativ mit Wasserdampf und/oder Kohlendioxid aktiviert (Gasaktivierung). Als kohlenstoffhaltige Materialien können pflanzliche (z.B. Holz, Torf, Nussschalen, Fruchtkerne, Lignite, Holzkohle), tierische (z.B. Blut, Knochen) und/oder mineralische (z.B. Braunoder Steinkohle, petrochemische Kohlenwasserstoffe) Rohstoffe eingesetzt werden.

Für Anwendungen in der Flüssigkeits- und Gasreinigung müssen Aktivkohlen in pulvriger, körniger oder granulierter Form vorliegen. Entsprechende Formaktivkohle wird durch Aktivieren eines gekörnten Rohstoffs hergestellt oder man teigt vor der Aktivierung den kohlenstoffhaltigen pulverisierten Rohstoff mit einem Bindemittel an, brikettiert anschließend und zerkleinert die Briketts gegebenenfalls auf die gewünschte Korngröße.

Im Stand der Technik sind eine Vielzahl von Verfahren zur Herstellung von Formaktivkohle bekannt. Insbesondere sind sie auch Gegenstand einer Reihe von Patenten bzw. Patentanmeldungen.

Beispielsweise beschreibt die DE 38 34 743 A1 ein Verfahren zur Herstellung von grobporiger Formkohle auf der Basis von Holzkohlenstaub, Holzkohlenteer als Bindemittel und Natronlauge zur Imprägnierung durch Mischen, Kneten, Formgebung, Schwelung und Aktivierung mit Wasserdampf oder Kohlendioxid. Holzkohlenstaub und damit auch die aus diesem hergestellte Aktivkohle enthält je nach Herkunft und Rohstoff einen beträchtlichen Anteil an Asche. Diese Asche trägt jedoch nicht zur Bildung der aktiven Oberfläche der Aktivkohle bei. Die resultierenden Aktivkohlen weisen daher ein nur mäßiges Adsorptionsvermögen auf. Darüber hinaus muss die Aktivkohle zusätzlich gewaschen und getrocknet werden.

In der DE 41 32 971 A1 wird ein Verfahren zur Herstellung von Kohlenstoffmolekularsieben aus feinstgemahlener Steinkohle unter Zugabe von Steinkohlenteerpech als Bindemittel beschrieben, bei dem die Steinkohle vor der Bindemittelzugabe mit Luft oxidiert und nach der Schwelung mit Wasserdampf aktiviert und anschließend mit kohlenstoffabspaltenden Kohlenwasserstoffen behandelt wird. Derartig aufwendig hergestellte Aktivkohle besitzt im Bereich der Mikroporen eine sehr enge Porenradienverteilung, die speziell für die Trennung von Sauerstoff und Stickstoff geeignet ist. Für die Mehrzahl der Aktivkohleanwendungen ist der verfahrenstechnische Mehraufwand, bestehend aus einer oxidativen Vorbehandlung der Steinkohle und der zweiten Aktivierungsstufe mittels kohlenstoffabspaltender Kohlenwasserstoffe, nicht erforderlich bzw. hinderlich. Daneben ist vor den Hintergrund zunehmender Bedeutung umweltpolitischer Fragestellungen auch der Einsatz von Teer bzw. Pech als Bindemittel mit Nachteilen verbunden. Sowohl Teer wie auch Pech besitzen human- und ökotoxische Wirkung und sind schwer zu handhaben, da sämtliche Lagereinrichtungen und Transportwege beheizt werden müssen.

Die EP 423 967 B1 beschreibt ein Verfahren zur Herstellung von körniger Aktivkohle unter Verwendung eines chemischen Aktivierungsprozesses. Ausgangsmaterial sind kohlenstoffhaltige Pflanzenprodukte, wie z.B. Nussschalen, Obst- oder Olivenkerne, mit einer Konzentration von mehr als 30 Gew.-% an natürlichem Bindemittel, insbesondere Lignin. Dieses Ausgangsmaterial wird zerkleinert, mit Phosphorsäure zur Imprägnierung gemischt, pelletiert und verkohlt. Aktivkohlen aus derartigen Pflanzenprodukten weisen für diverse Anwendungen eine zu geringe Härte auf. Des Weiteren ist bedingt durch die chemische Aktivierung ein im Vergleich zur Gasaktivierung zusätzlicher Verfahrensschritt, eine Waschung zur Säureentfernung, notwendig. Hierbei müssen zusätzliche gesetzliche Auflagen für den Umgang mit den für die Waschung notwendigen chemischen Substanzen und den Altchemikalien berücksichtigt werden und es fallen zusätzliche Investitionskosten an.

In der US 5,306,675 wird ein Verfahren zur Herstellung von Formlingen für die Herstellung von Formaktivkohle beschrieben. Edukt ist eine Mischung von Kohle und/oder Graphit, 3-10% Methylcellulose und/oder seiner Derivate als Bindemittel, 0,5-5% Polyvinylalkohol als Co-Bindemittel und 100-200% Wasser, bezogen auf den Kohlenstoff. Die Aktivkohlekörper werden nach ihrer Formgebung zuerst mit elektromagnetischer Strahlung bestrahlt und anschließend in einem gewöhnlichen Ofen gelagert, bis ihr Wassergehalt 15% des ursprünglichen Wertes beträgt. Bei der Weiterverarbeitung zu Formaktivkohle, also der Carbonisierung und Aktivierung, kommt es zu Abplatzungen und Rissen in den Aktivkohleformlingen. Ferner sind die mit diesem Verfahren hergestellten Formlinge für viele Anwendungen nicht hinreichend fest und besitzen eine eher niedrige Härte.

Die DE 42 34 785 C2 und die DE 42 34 786 C2 beschreiben Verfahren zur Herstellung von geformter Aktivkohle durch Vermahlen der Edukte, Mischen mit einem Bindemittel, Verpressen oder Extrudieren dei Mischung zu Formlingen und anschließender Carbonisierung und Aktivierung der Formlinge in einem speziellen Drehrohrofen. Die DE 42 34 786 C2 verwendet als Edukt aus Altholz gewonnene Holzkohle, die DE 42 34 785 C2 eine Mischung aus Holzkohle und getrocknetem Klärschlammgranulat. Aufgrund der minderwertigen Edukte Altholz und Klärschlamm kommt es bei den hergestellten Aktivkohlen zu negativen Auswirkungen auf die Produkteigenschaften. So ist z.B. der Aschegehalt einer nach der DE 42 34 785 C2 hergestellten Aktivkohle mit 10 bis über 30 Gew.-% (bezogen auf die trockene Aktivkohle) sehr hoch. Dementsprechend liegen die Werte für die spezifische Oberfläche der Aktivkohle deutlich unter denen sehr guter Produkte (beispielsweise kann bei Verwendung von Klärschlamm und Holzkohle im Verhältnis 1:1 nur eine Jodzahl von 950 m²/g gemessen werden). Die mit diesen beiden Verfahren hergestellten Aktivkohlen weisen darüber hinaus in der Regel unerwünschte Risse im Material auf, wodurch es zu einer Schwächung oder sogar zu einem Aufplatzen des Kornverbundes kommen kann. Des Weiteren ist beim Einsatz von Klärschlamm und insbesondere von belastetem Altholz bei der Verkohlung eine umfangreichere Gasreinigung zu installieren, die zusätzliche Investitionskosten verursacht. Außerdem ist bei der Verwendung von Kohle aus Altholz mit Störstoffen zu rechnen, z.B. Inerten, Eisen bzw. Nichteisen-Metallen (FE/NE-Metallen), etc., die mit entsprechendem verfahrenstechnischen Aufwand entfernt werden müssen.

Der vorliegenden Erfindung liegt daher die Aufgabe zugrunde, hochwertige Formaktivkohle sowie ein Verfahren zur Herstellung dieser hochwertigen Formaktivkohle bereitzustellen, die die Nachteile des Standes der Technik nicht aufweisen. Insbesondere soll die Formaktivkohle kostengünstig und einfach herzustellen sein und große aktive Oberflächen und gute Härten aufweisen. Das erfindungsgemäße Verfahren soll darüber hinaus bei bereits bestehenden Anlagen zur Herstellung von Formaktivkohle ohne große Modifikationen eingesetzt werden können.

Gelöst wird diese Aufgabe durch das Verfahren gemäß Hauptanspruch und die Formaktivkohle gemäß dem nebengeordneten Anspruch 24. Spezielle Verfahrensmerkmale sind in den Unteransprüchen beschrieben.

Bei dem erfindungsgemäßen Verfahren zur Herstellung von Formaktivkohle wird ein kohlenstoffhaltiges Material oder eine Mischung mehrerer kohlenstoffhaltiger Materialien nach der Vermahlung mit einem wasserhaltigen Bindemittel oder einer Mischung mehrerer Bindemittel, von denen mindestens eines wasserhaltig ist, homogen vermischt. Dann wird die Mischung aus kohlenstoffhaltigem Material und Bindemittel zu Formkörpern geformt. Diese werden erfindungsgemäß auf einen Gesamtwassergehalt von maximal 3 Gew.-% bezogen auf das Formkörpergewicht getrocknet. Die derart geformten und getrockneten Formkörper werden nachfolgend einer Carbonisierung und abschließend einer Gasaktivierung unterzogen. In der vorliegenden Anmeldung sind hierbei unter wasserhaltigen Bindemitteln allgemein solche Bindemittel zu verstehen, die einen Wassergehalt zwischen 10 und 50 Gew.-%, vorzugsweise zwischen 15 und 25 Gew.-%, aufweisen. Ohne Einschränkung der Allgemeinheit sind Beispiele für erfindungsgemäß eingesetzte wasserhaltige Bindemittel Zuckerrübenmelasse, Zuckerrohrmelasse oder wässerige Lösungen von Natriumcarboxylmethylcellulose, Stärke, Polyvinylacetat oder Polyvinylalkohol.

Als kohlenstoffhaltiges Material können erfindungsgemäß alle kohlenstoffhaltigen organischen Materialien eingesetzt werden. Vorzugsweise ist dieses Material bindemittelfrei. Weiterhin wird bevorzugt ein kohlenstoffhaltiges Material verwendet, das durch natürliche und/oder künstliche thermische Behandlung eines kohlenstoffhaltigen Pflanzenproduktes entstanden ist. In diesem Sinn besonders bevorzugt sind Holzkohle und/oder Holzkohle aus Altholz. Weitere vorzugsweise verwendete kohlenstoffhaltige Materialien sind Torfkohle, Steinobstkerne, Nussschalen, Steinkohlenkoks und Braunkohlenkoks. Besonders bevorzugt verwendet werden allerdings Holzkohlen, insbesondere Buchenholzkohlen, da die erfindungsgemäß aus Holzkohle hergestellte Formaktivkohle besonders gute Produkteigenschaften aufweist, wie beispielsweise ein hohes Adsorptionsvermögen und eine sehr gute Härte der Formaktivkohlekörper. Dies wird erfindungsgemäß durch die natürliche Kapillarstruktur der Holzkohle begünstigt, durch die die Makroporen der Formaktivkohlekörper bereits vorgebildet sind.

Optional können dem kohlenstoffhaltigen Material ein oder mehrere Zuschlagstoffe zugesetzt werden. Geeignete Zuschlagstoffe verbessern die Verarbeitbarkeit des Gemisches aus kohlenstoffhaltigem Material und Bindemittel bei der Formgebung und/oder wirken katalytisch bei der Gasaktivierung. Erfindungsgemäß können alle im Stand der Technik für die Herstellung von Aktivkohle bekannten Zuschlagstoffe verwendet werden. Vorzugsweise werden als Zuschlagstoffe KOH-Lösung, K₂CO₃, Tenside, Stearate und/oder Carboxymethylcellulose (CMC) mit Gewichtsanteilen von jeweils bis zu 20 Gew.-% bezogen auf das Gemisch aus kohlenstoffhaltigem Material und Bindemittel eingesetzt.

Erfindungsgemäß wird das kohlenstoffhaltige Material sowie gegebenenfalls die Zuschlagstoffe fein vermahlen. Vorzugsweise weist das Mahlprodukt dabei zu 100 % eine Korngröße von kleiner 60 µm auf. Besonders bevorzugt ist ein Kornspektrum von 100 Gew.-% kleiner 60 µm und mindestens 95 Gew.-% zwischen 10 und 45 µm. In einer bevorzugten Variante wird mindestens ein kohlenstoffhaltiges Material bereits vermahlen eingesetzt.

Das Produkt der Vermahlung wird mit einem wasserhaltigen Bindemittel oder einer Mischung mehrerer Bindemittel, von denen mindestens eines wasserhaltig ist, homogen vermischt. In bevorzugten Ausführungsformen werden zuerst entweder Bindemittel oder kohlenstoffhaltigen Materialien homogen vermischt und anschließend mit den kohlenstoffhaltigen Materialien oder den Bindemitteln homogen vermischt . Die homogene Vermischung kann beispielsweise in einem Sigma- oder einem Z-Kneter erfolgen.

Als Bindemittel geeignet sind alle Bindemittel, die kohlenstoffhaltige Materialien in einer homogenen Mischung benetzen und nach der Trocknung und Carbonisierung eine harte Matrix bilden können. Erfindungsgemäß wird hierfür mindestens ein wasserhaltiges Bindemittel verwendet. Als wasserhaltiges Bindemittel besonders bevorzugt sind Melasse, insbesondere Zuckerrüben- und/oder Zuckerrohrmelasse, oder wässerige Lösungen von Natriumcarboxylmethylcellulose, Stärke, Polyvinylacetat oder -alkohol. Im Gegensatz zu herkömmlichen Bindemitteln besitzt Melasse neben guter Verfügbarkeit, leichter Handhabbarkeit und niedrigem Preis keine human- oder ökotoxischen Bestandteile.

Sofern man eine Mischung von wasserhaltigen und nicht-wasserhaltigen Bindemitteln einsetzt, können als nicht-wasserhaltige Bindemittel alle aus dem Stand der Technik bekannten Bindemittel verwendet werden. Der Vorzug wird hierbei Steinkohlenteer, Holzkohlenteer, Bitumen und/oder anorganischen Gelen (wie z.B. Kieselgel, Eisen- oder Aluminiumhydroxid) gegeben.

Der Anteil des Bindemittels oder der Bindemittelmischung an der Zusammensetzung kann in weiten Bereichen variieren. Bevorzugt werden 10 bis 60 Gew.-% Bindemittel bezogen auf die Mischung aus kohlenstoffhaltigem Material und Bindemittel eingesetzt. Besonders bevorzugt sind 25 bis 40 Gew.-% Bindemittel.

Nach der homogenen Vermischung von kohlenstoffhaltigem Material und Bindemittel wird diese Mischung mittels üblicher Formgebungsverfahren zu Formkörpern geeigneter Größe geformt. Beispielsweise können die Rohformlinge mit Hilfe einer Kollergangpresse, einer Strangpresse oder eines Extruders geformt werden. Die Verfahrensschritte Vermischung und Formgebung werden dabei vorzugsweise in getrennten Apparaturen durchgeführt. In einer bevorzugten Ausführungsform des erfindungsgemäßen Verfahrens wird die Vermischung des kohlenstoffhaltigen Materials mit dem Bindemittel in der gleichen Apparatur wie die anschließende Formgebung durchgeführt. Vorzugsweise erfolgt dies in einem Extruder.

Die Trocknung der Formkörper auf ≤ 3 Gew.-% Restfeuchte bzw. Gesamtwassergehalt erfolgt vorteilhafterweise in einer eigens dafür vorgesehenen Apparatur, bei der Verweilzeit und Aufheizungsrate bzw. -temperatur flexibel eingestellt werden können. Durch die Trocknung in einer geeigneten Apparatur anstelle des für die Carbonisierung üblichen Drehrohres können die Formkörper langsam und schonend, gegebenenfalls in ruhender Schüttung, aufgeheizt werden, so dass der Kornverband der Formkörper keinen Schaden nimmt und die Formkörper nicht zerkleinert oder deformiert werden. Das nach der Trocknung erhaltene Zwischenprodukt weist so bezüglich Härte und Kornverband optimierte Eigenschaften auf und kann daher problemlos carbonisiert und aktiviert werden, ohne dass hierbei der Kornverband gesprengt wird. Bei direkter Carbonisierung der ungetrockneten Formkörper erleidet der Kornverband durch zu hohe Wasserdampfpartialdrücke im Innern der Formkörper bei den hohen Carbonisierungstemperaturen eine Schwächung, was zu Härteverlust und Abplatzungen führt. Auch können die feuchten Trocknungsabgase separat abgeführt werden und gelangen somit nicht in den Gasstrom der Carbonisierung oder Aktivierung, wo sie eine unkontrollierte Aktivierungsreaktion unterhalten würden.

Für die Trocknung wird bevorzugt ein Bandtrockner verwendet und die Formkörper werden vorteilhafterweise in ruhender Schüttung getrocknet. Besonders bevorzugt werden die Formkörper bis auf ≤ 1 Gew.-% Restfeuchte getrocknet.

Vorzugsweise werden die Formkörper des Weiteren in einem erhitzten und gegebenenfalls sauerstoffreduzierten oder -freien Gasstrom getrocknet. Die Führung des Gasstromes erfolgt dabei in geeigneter Weise, vorzugsweise in Gegenstrom oder Kreuzstrom zu den Formkörpern in der Trocknungsapparatur.

Vorteilhafterweise erfolgt die Trocknung der Formkörper innerhalb von 0,2 bis 12 Stunden. Dabei werden bevorzugt Temperaturen von 40 bis 170 °C verwendet. Besonders bevorzugt werden die Formkörper innerhalb von 0,5 bis 6 Stunden und bei 60 bis 150 °C getrocknet. Besonders bevorzugt erfolgt die Trocknung unterhalb der Selbstentzündungstemperatur der Formkörper.

Bei der schonenden Trocknung entweichen niederflüchtige Verbindungen sowie Wasser, wodurch die Formkörper mechanisch gefestigt werden. Daneben finden, insbesondere bei Verwendung von Melasse als Bindemittel, erste Kondensationsreaktionen zwischen den Zuckermolekülen des Bindemittels statt. Hierdurch bedingt kommt es neben der mechanischen Festigung der Formkörper durch die Trocknung auch zu einer chemischen Verfestigung.

Im Anschluss an die Trocknung der Formkörper werden diese nach einer der im Stand der Technik für die Herstellung von Aktivkohle bekannten Methoden carbonisiert. Als Zieltemperaturen werden dabei vorteilhafterweise Temperaturen von 400 bis 750°C verwendet. Neben dem Verlust der flüchtigen organischen Bestandteile wird bei diesen Temperaturen der Kohlenstoff aus dem Bindemittel verkohlt und es wird ein gemeinsames Kohlenstoffgitter aus dem Kohlenstoff des Bindemittels und dem des kohlenstoffhaltigen Materials aufgebaut. Besonders bevorzugt erfolgt die Carbonisierung bei 500 bis 650 °C.

In einer bevorzugten Ausführungsform des erfindungsgemäßen Verfahrens werden die Formkörper in einem Dreizonen-Drehrohr carbonisiert. Dieses Drehrohr zeichnet sich durch seine spezielle Temperaturführung aus: in der ersten Zone des Drehrohres wird das Behandlungsgut bevorzugt mit 5 °C/min auf 250 °C und in der zweiten Zone bevorzugt mit 10 °C/min auf die Zieltemperatur aufgeheizt; in der dritten Zone verharren die Formlinge bei der gewünschten Zieltemperatur, wobei der Stoff- und Wärmetransport im Drehrohr durch Hubschaufeln unterstützt wird. Diese spezielle Temperaturführung des Dreizonen-Drehrohres gewährleistet ein schonendes Austreiben der flüchtigen Bestandteile aus Bindemittel und Kohlstoffträger. Dies ist insbesondere für die gezielte Ausbildung der Makroporenstruktur von Bedeutung.

Nach der Carbonisierung wird die Gasaktivierung der Formkörper durchgeführt. Das Carbonisat wird hierbei nach einer aus dem Stand der Technik bekannten Methode mit Hilfe eines Gases aktiviert. Bevorzugt erfolgt die Aktivierung bei 700 bis 1000 °C. Besonders bevorzugt werden Temperaturen von 800 bis 950 °C verwendet. Zur Aktivierung der Formkörper können alle hierfür bekannten Gase verwendet werden. Insbesondere geeignet sind Wasserdampf und Kohlendioxid.

Überraschenderweise wurde festgestellt, dass mit dem erfindungsgemäßen Verfahren bei abschließender Gasaktivierung insbesondere durch den Verfahrensschritt der langsamen und schonenden Trocknung sehr gute Produkthärten für die hergestellten Aktivkohlen erreicht werden. Neben einer langsamen Aufheizrate, bei der die Feuchtigkeit der Formkörper über einen langen Zeitraum verteilt freigesetzt wird, ist hierbei auch eine ruhende Schüttung der weichen Formkörper von Voneil. Dadurch kommt es bei der anschiießenden Carbonisierung und Aktivierung der Formkörper nicht zu unerwünschten Rissen und damit zu einer Schwächung bzw. sogar zu einem Auf- oder Abplatzen des Kornverbundes. Darüber hinaus gelangt die bei der Trocknung entstehende Wasserfeuchte aufgrund des separaten Verfahrensschrittes nicht in den Gasstrom des Carbonisators und gegebenenfalls des Aktivators, wo sie unerwünscht ist und zu unkontrollierten Gasaktivierungsreaktionen führen kann.

Die mit dem erfindungsgemäßen Verfahren hergestellten Aktivkohleformkörper zeigen sehr gute Produktqualitäten. Beispielsweise ist erfindungsgemäß hergestellte Formaktivkohle durch ihre hohe Abriebfestigkeit auch zur Reaktivierung geeignet, so dass sie mehrfach wiederverwendet werden kann. Darüber hinaus nutzt das Verfahren bei der Verwendung von Holzkohlen die für die Adsorptionseigenschaften vorteilhafte Holzstruktur optimal aus: Die von Holzzellen stammenden Strukturen, die bei den thermischen Prozessen erhalten bleiben, werden für die Adsorption als Zugangsporen benutzt. Bezüglich des Aschegehaltes und der spezifischen Oberfläche erreicht die erfindungsgemäß hergestellte Aktivkohle überdurchschnittliche Werte. Ferner ist insbesondere die signifikante Steigerung der Härte von Carbonisat und Aktivat verglichen mit derjenigen nach dem Stand der Technik hervorzuheben.

Die Adsorptions- und Desorptionscharakteristik von Aktivkohle wird im Wesentlichen durch ihre Porenstruktur, d.h. Porendurchmesser, -volumen und -verteilung, bestimmt. Die große innere Oberfläche von Aktivkohle kann in erster Linie auf Mikroporen mit einem Radius von bis zu 2 nm zurückgeführt werden. Vorteilhafterweise kann mit dem erfindungsgemäßen Verfahren die Porenstruktur der resultierenden Formaktivkohle gezielt beeinflusst werden, in dem beispielsweise die Parameter in den thermischen Prozessen der Trocknung, Carbonisierung und Aktivierung (z.B. Temperatur, Verweilzeit, Dampfdosierung) geeignet eingestellt oder die Rohstoffe geeignet ausgewählt (z.B. verschiedene Holzkohlen, verschiedene wasserhaltige Bindemittel) oder geeignet aufbereitet (z.B. Korngröße des vermahlenen kohlenstoffhaltigen Materials, Wassergehalt des Bindemittels) werden. Auch durch die Verwendung von Zuschlagstoffen können die Produkteigenschaften in der gewünschten Weise beeinflusst werden. Beispielsweise führt die Verwendung eines sehr fein gemahlenen kohlenstoffhaltigen Materials in Verbindung mit erhöhtem Pressdruck bei der Formgebung zu einem härteren Carbonisat. Wird dieses Carbonisat bei einer niedrigen Aktivierungstemperatur für vergleichsweise lange Zeit aktiviert, so besitzt das Aktivat einen erhöhten Anteil an Mikroporen. Höhere Aktivierungstemperaturen bei kürzeren Aktivierungszeiten resultieren hingegen in Aktivaten mit ausgeprägtem Übergangs- und Makroporenbereich.

Die Eigenschaften der erfindungsgemäß hergestellten Aktivkohle können somit durch Veränderung der Rezeptur bzw. der Verfahrensparameter gezielt für bestimmte Anwendungen eingestellt werden. Insbesondere eignet sich die erfindungsgemäß hergestellte Aktivkohle für die verschiedenen Verfahren der Lösungsmittelrückgewinnung, für die Gewinnung und Wiedergewinnung von Gasen und Dämpfen, für die adsorptive Gasreinigung, für die Brenngasaufbereitung, für die Anwendung in Kfz-Filtern (Innenraumfilter, Tankverlustfilter), für die Trink-, Ab- und Brauchwasserreinigung und für die Reinigung, Desodorierung und Entfärbung von Flüssigkeiten.

Vorteilhafterweise ist des Weiteren mit dem erfindungsgemäßen Verfahren erstmals die Herstellung einer hochwertigen Formaktivkohle ausschließlich auf der Basis nachwachsender Rohstoffe möglich, indem Edukte wie Holzkohlen als kohlenstoffhaltiges Material und Melasse als wasserhaltiges Bindemittel verwendet werden. Das erfindungsgemäße Verfahren berücksichtigt somit durch Verwendung ökologisch unbedenklicher nachwachsender Rohstoffe und durch prozessinterne Wärmeschaltung die Vorgaben des produktionsintegrierten Umweltschutzes.

Ferner ist bei der Durchführung des erfindungsgemäßen Verfahrens der Einsatz vorhandener Anlagen zur Herstellung von Formaktivkohle weitestgehend möglich. Es sind lediglich geringe zusätzliche Investitionskosten für den zusätzlichen Verfahrensschritt der Trocknung der Formkörper in einem eigens dafür vorgesehenen Ofen notwendig.

Ohne Einschränkung der Allgemeinheit wird der erfindungsgemäße Gegenstand anhand einiger Ausführungsbeispiele näher erläutert.

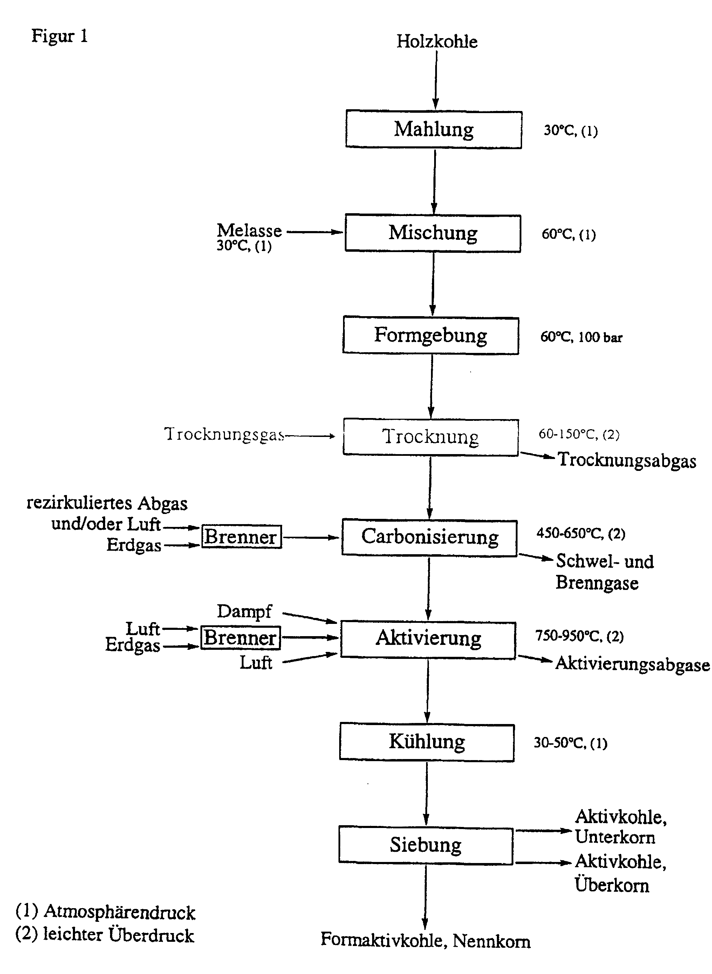

Figur 1 zeigt den schematischen Ablauf des erfindungsgemäßen Verfahrens zur Herstellung von Formaktivkohle gemäß einer möglichen Ausführungsform, bei der als kohlenstoffhaltiges Material Holzkohle und als wasserhaltiges Bindemittel Melasse eingesetzt wird.

Die in den folgenden Ausführungsbeispielen 1 bis 3 verwendeten Edukte besitzen die in Tabelle 1 aufgeführten Spezifikationen. Die Beispiele 1 und 2 beschreiben erfindungsgemäße Herstellungsverfahren von Formaktivkohle. In Beispiel 3 wird nur der Verfahrensschritt der Trocknung der Formkörper und dessen Auswirkung auf die Härte der Formkörper betrachtet.

**Tabelle 1:**

| Charakteristische Stoffdaten der Edukte | | | |
|---|---|---|---|
| **Eigenschaft** | **Einheit** | **Holzkohle** | **Melasse** |
| Herkunft | | Buchenholz | Zuckerrüben |
| Wassergehalt nach DIN 51718 | Gew.-% | 5,9 | 19,6 |
| Aschegehalt (i.wf.) nach DIN 51719 | Gew.-% | 1,8 | 8,6 |
| Gehalt an flüchtigen Bestandteilen (i.wf.) nach DIN 51720 | Gew.-% | 14,7 | |
| Zuckergehalt nach Fehling | Gew.-% | | 63,7 |

### Beispiel 1

Die Holzkohle wird mittels einer Kugelmühle auf eine Korngröße von 95 Gew.-% < 40 µm zerkleinert. Aus den Edukten (Spezifikationen gemäß Tabelle 1) wird mit einem Z-Kneter eine Mischung aus 63 Gew.-% Kohlemehl und 37 Gew.-% Melasse hergestellt. Die Formgebung erfolgt in einer Kollergangpresse, die das Mischgut zu Formlingen mit 4 mm Durchmesser und einer Länge zwischen 4 mm und 10 mm verpresst. Anschließend werden die Formlinge in ruhender Schüttung in einem Umluft-Trockenschrank bei 120°C für 3 Stunden getrocknet. Die Restfeuchte beträgt 0,92 Gew.-%.

In einem Drehrohrofen werden die trockenen Formlinge unter Inertgasatmosphäre bei 500 °C über eine Zeitdauer von 2 Stunden carbonisiert. Anschließend wird das Carbonisat in einem Drehrohrofen bei 850 °C über eine Zeitdauer von 5,5 Stunden unter Inertgasatmosphäre mit Wasserdampf aktiviert. Die auf diese Weise hergestellte Formaktivkohle weist die in Tabelle 2 aufgeführten Produkteigenschaften auf.

**Tabelle 2:**

| Charakteristische Qualitätsmerkmale der Aktivkohle | | |
|---|---|---|
| **Eigenschaft** | **Einheit** | **Spezifikation** |
| Aschegehalt (i.wf.) nach DIN 51719 | Gew.-% | 4,2 |
| Ball-Pan-Härte nach ASTM D 3802-79 | Gew.-% | 99,2 |
| Jodzahl nach AWWA B 600-78 | mg/g | 1240 |
| Methylenblauzahl nach DBA 6 | ml | 29 |

### Beispiel 2

Die Holzkohle wird mittels einer Kugelmühle auf eine Korngröße von 95 Gew.-% < 27 µm zerkleinert. Aus den Edukten (Spezifikationen gemäß Tabelle 1) wird mit einem Z-Kneter eine Mischung aus 66,5 Gew.-% Kohlemehl und 33,5 Gew.-% Melasse hergestellt. Die Formgebung erfolgt in einer Kollergangpresse, die das Mischgut zu Formlingen mit 2 mm Durchmesser und einer Länge zwischen 2 mm und 10 mm verpresst. Anschließend werden die Formlinge in ruhender Schüttung in einem Umluft-Trockenschrank bei 120 °C für 3 Stunden getrocknet. Die Restfeuchte beträgt 0,90 Gew.-%.

In einem Drehrohrofen werden die trockenen Formlinge unter Inertgasatmosphäre bei 500 °C über eine Zeitdauer von 2 Stunden carbonisiert. Anschließend wird das Carbonisat in einem Drehrohrofen bei 900 °C über eine Zeitdauer von 5 Stunden unter Inertgasatmosphäre mit Wasserdampf aktiviert. Die auf diese Weise hergestellte Formaktivkohle weist die in Tabelle 3 aufgeführten Produkteigenschaften auf.

**Tabelle 3:**

| Charakteristische Qualitätsmerkmale der Aktivkohle | | |
|---|---|---|
| **Eigenschaft** | **Einheit** | **Spezifikation** |
| Aschegehalt (i.wf.) nach DIN 51719 | Gew.-% | 6,8 |
| Ball-Pan-Härte nach ASTM D 3802-79 | Gew.-% | 98,8 |
| Jodzahl nach AWWA B 600-78 | mg/g | 1201 |
| Methylenblauzahl nach DBA 6 | ml | 25 |

### Beispiel 3

In diesem Ausführungsbeispiel wird die Trocknung der Formlinge näher betrachtet. Für diese Versuche wird ein Gemisch aus 63 Gew.-% Kohlemehl und 37 Gew.-% Melasse eingesetzt (Spezifikationen gemäß Tabelle 1). Dieses Gemisch weist einen Wassergehalt von ca. 11 Gew.-% auf.
(i) Fünf Teilschüttungen ungetrockneter Formkörper werden in flachen Wannen ausgebreitet (Schütthöhe ca. 20 mm) und bei 80 °C in einem Umlufttrockner zwischen 0,5 h und 4 h in ruhender Schüttung getrocknet. Der Trocknungsverlust der Teilschüttungen wird jeweils dokumentiert. Er nähert sich zeitlich asymptotisch einem Wert von durchschnittlich 12 Gew.-%, wobei bereits nach 2 h durchschnittlich 7,2 Gew.-% Trocknungsverlust gemessen werden.
(ii) Im Vergleich zu diesen Daten erfährt eine Teilschüttung ungetrockneter Pellets, die in einem CO₂-inertisierten Ofen 0,75 h bei 300 °C ruhend behandelt wird, einen Trocknungsverlust von 27,9 Gew.-%, wobei neben der Wasserfeuchte auch ca. 15 Gew.-% flüchtige organische Verbindungen ausgetrieben werden. Derart behandelte Schüttungen sind jedoch durch das Auftreten eines Feinanteils gekennzeichnet, der aus scheibenförmig abgeplatzten Pelletstücken besteht. Unter dem Lichtmikroskop ist an einer zufälligen Auswahl von Einzelpellets eine signifikant höhere Anzahl tiefer Querrisse innerhalb dieser Formkörper zu erkennen.
(iii) Eine Teilschüttung ungetrockneter Formkörper wird zunächst in einem Umlufttrockner 4 h bei 80 °C in ruhender Schüttung und anschließend 0,75 h bei 300° C in einem CO₂-inertisierten Ofen in ruhender Schüttung getrocknet. Der Trocknungsverlust beträgt 28,7 Gew.-%.

Nach der Trocknung der Teilschüttungen gemäß den oben genannten alternativen Methoden werden anschließend die Ball-Pan-Härte der getrockneten Formlinge nach ASTM D 3802-79 bestimmt, die in Tabelle 4 dokumentiert sind.

**Tabelle 4:**

| Behandlungsart und resultierende Ball-Pan-Härte der getrockneten Formlinge. | | |
|---|---|---|
| | **Behandlung** | **Ball-Pan-Härte nach ASTM D 3802-79** |
| (i) | Ruhende Lagerung bei 80 °C für 4 h | 99,0 Gew.-% |
| (ii) | Ruhende Lagerung bei 300 °C für 0,75 h | 99,2 Gew.-% |
| (iii) | Ruhende Lagerung bei 80 °C für 4 h mit anschließender Lagerung bei 300 °C für 0,75 h | 99,8 Gew.-% |

Die getrockneten Formlinge besitzen gute bis sehr gute Härten (vgl. Tabelle 4). Obgleich die bei 300 °C getrocknete Probe (ii) eine geringfügig bessere Härte besitzt als die bei 80 °C getrocknete Probe (i), ist die Behandlung nach Methode (ii) nicht vorteilhaft. Dies liegt in dem durch Abplatzungen entstandenen Feinanteil begründet. Darüber hinaus weisen die nach Methode (ii) getrockneten Formlinge - wie oben erwähnt - Risse und Klüfte auf, die den Kornverband schwächen, insbesondere im Hinblick auf die weitere thermische Behandlung in der Carbonisierung und Aktivierung. Demgegenüber erreichen die nach Methode (iii) getrockneten Formkörper eine sehr gute Härte, ohne dass Abplatzungen, Risse oder Klüfte erkennbar sind. Diese Methode (iii) stellt die Abfolge des erfindungsgemäßen Verfahrens bezüglich der Trocknung und der anschließenden weiteren Aufheizung im Carbonisator hinreichend gut nach.

## Patentansprüche

1. Verfahren zur Herstellung von Formaktivkohle mit folgenden Schritten:
- Vermahlung eines oder mehrerer kohlenstoffhaltiger Materialien,
- homogene Vermischung des vermahlenen kohlenstoffhaltigen Materials mit einem wasserhaltigen Bindemittel oder einer Mischung mehrerer Bindemittel, von denen mindestens eines wasserhaltig ist,
- Formgebung der Mischung aus kohlenstoffhaltigem Material und Bindemittel zu Formkörpern,
- Trocknung der Formkörper vor der Carbonisierung zur Festigung des Komverbandes bis auf ≤ 3 Gew.-% Gesamtwassergehalt,
- Carbonisierung der Formkörper und
- Aktivierung der Formkörper mittels eines Aktivierungsgases.

2. Verfahren nach Anspruch 1,
**dadurch gekennzeichnet, dass** die Trocknung in ruhender Schüttung und/oder in einem Bandtrockner durchgeführt wird.

3. Verfahren nach Anspruch 1 oder 2,
**dadurch gekennzeichnet, dass** bei der Trocknung der Formkörper ein erhitzter und gegebenenfalls sauerstoffreduzierter oder -freier Gasstrom über die Formkörper geführt wird.

4. Verfahren nach einem oder mehreren der Ansprüche 1 bis 3,
**dadurch gekennzeichnet, dass** die Formkörper bis auf ≤ 1 Gew.-% Gesamtwassergehalt getrocknet werden und/oder dass die Trocknung der Formkörper bei Temperaturen von 40 bis 170° C, insbesondere bei 60 bis 150° C, durchgeführt wird und/oder dass die Trocknung der Formkörper unterhalb ihrer Selbstentzündungstemperatur durchgeführt wird und/oder dass die Formkörper innerhalb von 0,2 bis 12 Stunden, insbesondere innerhalb von 0,5 bis 6 Stunden, getrocknet werden.

5. Verfahren nach einem der Ansprüche 1 bis 4,
**dadurch gekennzeichnet, dass** als kohlenstoffhaltiges Material Holzkohle, Holzkohle aus Altholz, Torfkohle, Steinobstkerne, Nussschalen, Steinkohlenkoks und/oder Braunkohlekoks, verwendet wird und/oder dass ein kohlenstoffhaltiges Material verwendet wird, welches durch natürliche und/oder künstliche thermische Behandlung eines oder mehrerer kohlenstoffhaltiger Pflanzenprodukte carbonisiert ist und/oder dass als kohlenstoffhaltiges Material Holzkohle und/oder Holzkohle aus Altholz, insbesondere Buchenholzkohle, verwendet wird.

6. Verfahren nach einem oder mehreren der Ansprüche 1 bis 5,
**dadurch gekennzeichnet, dass** dem kohlenstoffhaltigen Material und/oder dem Bindemittel ein oder mehrere Zuschlagstoffe zugesetzt werden und/oder dass als Zuschlagstoff KOH-Lösung, K₂CO₃, Tenside, Stearate und/oder Carboxymethylcellulose zugesetzt wird.

7. Verfahren nach einem oder mehreren der Ansprüche 1 bis 6,
**dadurch gekennzeichnet, dass** 100 Gew.-% des kohlenstoffhaltigen Materials auf eine Korngröße < 60 µm vermahlen werden und/oder dass mindestens 95 Gew.-% des kohlenstoffhaltigen Materials auf eine Korngröße zwischen 10 und 45 um vermahlen werden.

8. Verfahren nach oder mehreren der Ansprüche 1 bis 7,
**dadurch gekennzeichnet, dass** als wasserhaltiges Bindemittel ein Bindemittel mit 10 bis 50 Gew.-%, insbesondere mit 15 bis 25 Gew.-%, Wasser verwendet wird und/oder dass als wasserhaltiges Bindemittel Melasse verwendet wird und/oder dass als gegebenenfalls vorhandenes nicht-wasserhaltiges Bindemittel Steinkohlenteer, Holzkohlenteer, Bitumen und/oder ein anorganisches Gel verwendet wird und/oder dass bezogen auf die Mischung aus kohlenstoffhaltigem Material und Bindemittel 10 bis 60 Gew.-% Bindemittel, insbesondere 25 bis 40 Gew.-%, eingesetzt werden.

9. Verfahren nach einem oder mehreren der Ansprüche 1 bis 8,
**dadurch gekennzeichnet, dass** die Verfahrensschritte Mischung und Formgebung in einer oder in zwei getrennten Apparaturen durchgeführt werden.

10. Verfahren nach einem oder mehreren der Ansprüche 1 bis 9,
**dadurch gekennzeichnet, dass** die getrockneten Formkörper bei Temperaturen von 400 bis 750 °C, insbesondere bei 500 bis 650 °C, carbonisiert werden und/oder dass die getrockneten Formkörper in einem Dreizonen-Drehrohr carbonisiert werden.

11. Verfahren nach einem oder mehreren der Ansprüche 1 bis 10,
**dadurch gekennzeichnet, dass** die getrockneten und carbonisierten Formkörper von 700 bis 1000 °C, insbesondere bei 800 bis 950 °C, aktiviert werden und/oder dass die getrockneten und carbonisierten Formkörper mit Wasserdampf und/oder Kohlendioxid aktiviert werden.

12. Verfahren nach einem oder mehreren der Ansprüche 1 bis 11,
**dadurch gekennzeichnet, dass** zunächst die kohlenstoffhaltigen Materialien vor, während oder nach der Vermahlung homogen vermischt werden und dass anschließend diese Feststoffinischung mit dem wasserhaltigen Bindemittel oder der Mischung mehrerer Bindemittel, von denen mindestens eines wasserhaltig ist, homogen vermischt wird.

13. Verfahren nach einem oder mehreren der Ansprüche 1 bis 12,
**dadurch gekennzeichnet, dass** zunächst die Bindemittel, von denen mindestens eines wasserhaltig ist, homogen miteinander vermischt werden und dass anschließend diese Bindemittelmischung mit dem kohlenstoffhaltigen Material oder der Mischung mehrerer kohlenstoffhaltiger Materialien homogen vermischt wird.

14. Verfahren nach einem oder mehreren der Ansprüche 1 bis 13,
**dadurch gekennzeichnet**, dss mindestens ein bereits vermahlenes kohlenstoffhaltiges Material verwendet wird.

15. Formaktivkohle erhältlich nach einem Verfahren nach einem oder mehreren der Ansprüche 1 bis 14.

## Claims

1. A method for producing shaped, activated charcoal with the following steps:
- grinding one or more carbon-bearing materials;
- homogenously mixing the milled carbon-bearing material with a water-containing binding agent or a mixture of several binding agents, of which at least one contains water;
- shaping the mixture consisting of carbon-bearing material and binding agent into molded articles;
- drying the molded articles before carbonization to set the grain structure to up to an overall water weight of ≤ 3 %by wt.;
- carbonizing the molded articles, and
- activating the molded articles by means of an activation gas.

2. The method according to claim 1, **characterized in that** drying takes place in a fixed bed and/or in a belt dryer.

3. The method according to claim 1 or 2, **characterized in that**, when drying the molded articles, a heated and, if necessary, oxygen-reduced or oxygen-free gas stream is passed over the molded articles.

4. The method according to one or more of claims 1 to 3, **characterized in that** the molded articles are dried to an overall water content of ≤ 1 %by wt. and/or that the molded articles are dried at temperatures of 40 to 170 °C, in particular 60 to 150 °C and/or that the molded articles are dried at below their self-ignition temperature and/or that the molded articles are dried within 0.2 to 12 hours, in particular within 0.5 to 6 hours.

5. The method according to one or more of claims 1 to 4, **characterized in that** the carbon-bearing material is wood charcoal, wood charcoal from old timber, peat coal, fruit pits, nut shells, coal coke and/or lignitic coke and/or that the carbon-bearing material used is carbonized via natural and/or synthetic thermal treatment of one or more carbon-bearing vegetable products and/or that the carbon-bearing material is wood charcoal and/or wood charcoal from old timber, in particular beechwood charcoal.

6. The method according to one or more of claims 1 to 5, **characterized in that** one or more aggregates are added to the carbon-bearing material and/or the binding agent and/or that KOH solution, K₂CO₃, surfactant, stearate and/or carboxymethyl cellulose are added as the aggregate.

7. The method according to one or more of claims 1 to 6, **characterized in that** 100 % by wt. of the carbon-bearing material is milled to a grain size of < 60 µm and/or that at least 95 % by wt. of the carbon-bearing material is milled to a grain size of between 10 and 45 µm.

8. The method according to one or more of claims 1 to 7, **characterized in that** the water-containing binding agent is a binding agent with 10 to 50 % by wt., in particular 15 to 25 % by wt., water and/or that molasses is used as the water-containing binding agent and/or that coal tar, wood charcoal tar, bitumen and/or an inorganic gel is used as any non-water-containing binding agent that might be present and/or that 10 to 60 %by wt. binding agent, in particular 25 to 40 %by wt., are used relative to the mixture consisting of carbon-bearing material and binding agent.

9. The method according to one or more of claims 1 to 8, **characterized in that** the steps of mixing and shaping are carried out in one or two separate apparatuses.

10. The method according to one or more of claims 1 to 9, **characterized in that** the dried molded articles are carbonized at temperatures of 400 to 750 °C, in particular at 500 to 650 °C and/or that the dried molded articles are carbonized in a three-zone torque tube.

11. The method according to one or more of claims 1 to 10, **characterized in that** the dried and carbonized molded articles are activated at temperatures of 700 to 1000 °C, in particular at 800 to 950 °C and/or that the dried and carbonized molded articles are activated with water vapor and/or carbon dioxide.

12. The method according to one or more of claims 1 to 11, **characterized in that** the carbon-bearing materials are homogeneously mixed before, during or after milling, and that this mixture of solids is subsequently homogeneously mixed with the water-containing binding agent or the mixture of several binding agents, of which at least one contains water.

13. The method according to one or more of claims 1 to 12, **characterized in that** the binding agents, of which at least one contains water, are first homogeneously mixed with each other, and that this binding agent mixture is subsequently homogeneously mixed with the carbon-bearing material or the mixture of several carbon-bearing materials.

14. The method according to one or more of claims 1 to 13, **characterized in that** at least one already milled carbon-bearing material is used.

15. A shaped, activated charcoal produced with a method according to one or several of claims 1 to 14.

## Revendications

1. Procédé de fabrication d'agglomérés de charbon actif consistant à suivre les étapes suivantes :
- broyer un ou plusieurs matériaux contenant du carbone,
- mélanger le matériau contenant du carbone broyé avec un liant aqueux ou avec un mélange de plusieurs liants dont un au moins est aqueux jusqu'à obtention d'un mélange homogène,
- former le mélange de matériau contenant du carbone et de liant en agglomérés,
- sécher les agglomérés avant carbonisation jusqu'à une teneur en eau totale ≤ 3 % en poids en vue de solidifier l'agglomération des grains,
- carboniser les agglomérés et
- activer les agglomérés au moyen d'un gaz d'activation.

2. Procédé selon la revendication 1,
**caractérisé en ce que** le séchage est effectué sans remuer et/ou dans un séchoir à tablier transporteur.

3. Procédé selon la revendication 1 ou 2,
**caractérisé en ce que**, pendant le séchage, on fait passer au-dessus des agglomérés un flux de gaz chauffé dans lequel la concentration en oxygène est éventuellement réduite ou égale à zéro.

4. Procédé selon une ou plusieurs revendications choisies parmi les revendications 1 à 3,
**caractérisé en ce que** les agglomérés sont séchés jusqu'à une teneur en eau totale ≤ 1 % en poids et/ou que les agglomérés sont séchés à une température comprise entre 40 et 170 °C, notamment entre 60 et 150 °C, et/ou que les agglomérés sont séchés à une température inférieure à leur température d'inflammation spontanée et/ou que le temps de séchage des agglomérés est compris entre 0,2 et 12 heures, notamment entre 0,5 et 6 heures.

5. Procédé selon l'une quelconque des revendications 1 à 4,
**caractérisé en ce que** le matériau contenant du carbone utilisé est du charbon de bois, du charbon de bois issu de vieux bois, de la tourbe carbonisée, des noyaux de fruits, des coquilles de noix, du coke de houille et/ou de lignite et/ou que le matériau contenant du carbone utilisé est un matériau carbonisé obtenu par le biais d'un traitement thermique naturel et/ou artificiel d'un ou de plusieurs produits végétaux contenant du carbone et/ou que le matériau contenant du carbone utilisé est du charbon de bois et/ou du charbon de bois issu de vieux bois, notamment du charbon de bois de hêtre.

6. Procédé selon une ou plusieurs revendications choisies parmi les revendications 1 à 5,
**caractérisé en ce qu'** on additionne au matériau contenant du carbone et/ou au liant une ou plusieurs substances inertes et/ou que la substance inerte additionnée est une solution de KOH, du K₂CO₃, des tensioactifs, des stéarates, et/ou de la carboxyméthylcellulose.

7. Procédé selon une ou plusieurs revendications choisies parmi les revendications 1 à 6,
**caractérisé en ce que** 100 % en poids du matériau contenant du carbone sont réduits à une granulométrie < 60 _m et/ou qu'au moins 95 % en poids du matériau contenant du carbone sont réduits à une granulométrie comprise entre 10 et 45 m.

8. Procédé selon une ou plusieurs revendications choisies parmi les revendications 1 à 7,
**caractérisé en ce que** le liant aqueux utilisé est un liant contenant 10 à 50 % en poids, notamment 15 à 25 % en poids d'eau et/ou que le liant aqueux utilisé est de la mélasse et/ou que le liant non aqueux éventuellement présent est du goudron de houille, du goudron de charbon de bois, du bitume et/ou un gel inorganique et/ou que, dans le mélange de matériau contenant du carbone et de liant, on utilise 10 à 60 % en poids, notamment 25 à 40 % en poids de liant.

9. Procédé selon une ou plusieurs revendications choisies parmi les revendications 1 à 8,
**caractérisé en ce que** les étapes de mélangeage et de mise en forme sont effectuées dans un même appareil ou dans deux appareils séparés.

10. Procédé selon une ou plusieurs revendications choisies parmi les revendications 1 à 9,
**caractérisé en ce que** les agglomérés séchés sont carbonisés à une température comprise entre 400 et 750 °C, notamment entre 500 et 650 °C, et/ou que les agglomérés séchés sont carbonisés dans un four à tube tournant avec trois zones de chauffage.

11. Procédé selon une ou plusieurs revendications choisies parmi les revendications 1 à 10,
**caractérisé en ce que** les agglomérés séchés et carbonisés sont activés à une température comprise entre 700 et 1000 °C, notamment entre 800 et 950 °C et/ou que les agglomérés séchés et carbonisés sont activés à la vapeur d'eau et/ou au dioxyde de carbone.

12. Procédé selon une ou plusieurs revendications choisies parmi les revendications 1 à 11,
**caractérisé en ce que** les matériaux contenant du carbone sont mélangés avant, pendant ou après le broyage jusqu'à obtention d'un mélange homogène et que ce mélange solide est ensuite gâché avec un liant aqueux ou avec un mélange de plusieurs liants dont un au moins est aqueux jusqu'à obtention d'un mélange homogène.

13. Procédé selon une ou plusieurs revendications choisies parmi les revendications 1 à 12,
**caractérisé en ce que**, dans un premier temps, on mélange les liants dont un au moins est aqueux jusqu'à obtention d'un mélange homogène et que, dans un deuxième temps, ce mélange de liant est mélangé au matériau contenant du carbone ou au mélange de plusieurs matériaux contenant du carbone jusqu'à obtention d'un mélange homogène.

14. Procédé selon une ou plusieurs revendications choisies parmi les revendications 1 à 13,
**caractérisé en ce qu'** au moins un matériau contenant du carbone utilisé est déjà broyé.

15. Aggloméré de charbon actif obtenu par un procédé selon une ou plusieurs revendications choisies parmi les revendications 1 à 14.
